# EUROPÄISCHE PATENTANMELDUNG

(11) **EP 3 217 506 A1**
(43) Veröffentlichungstag der Anmeldung: **13.09.2017**
(21) Anmeldenummer: 17160217.0
(22) Anmeldetag: 10.03.2017
(51) Int. Cl.: H02J 3/14

(54) **VERFAHREN ZUM BETREIBEN EINER DEZENTRALEN ENERGIEVERSORGUNGSEINRICHTUNG**

(30) Priorität: 11.03.2016 DE 102016204003
(71) Anmelder: Robert Bosch GmbH, 70442 Stuttgart (DE)
(72) Erfinder: Matter, Maren, 70565 Stuttgart (DE); Wald, Felix, 70186 Stuttgart (DE)

(57) **Zusammenfassung**

Verfahren zum Betreiben einer dezentralen Energieversorgungseinrichtung (10), wobei mittels der dezentralen Energieversorgungseinrichtung (10) elektrische und thermische Energie bereitstellbar ist, aufweisend die Schritte:
- Ermitteln eines Status von wenigstens einer an die dezentrale Energieversorgungseinrichtung (10) angeschlossenen Verbrauchseinrichtung (20, 30, 40);
- Ermitteln eines Auslastungsgrades der dezentralen Energieversorgungseinrichtung (10); und
- Bereitstellen von thermischer und/oder elektrischer Energie der dezentralen Energieversorgungseinrichtung (10) für die wenigstens eine Verbrauchseinrichtung (20, 30, 40) derart, dass die dezentrale Energieversorgungseinrichtung (10) mit maximiertem Auslastungsgrad betrieben wird.

## Beschreibung

Die Erfindung betrifft ein Verfahren zum Betreiben einer dezentralen Energieversorgungseinrichtung. Die Erfindung betrifft ferner eine dezentrale Energieversorgungseinrichtung.

### Stand der Technik

Bekannt sind sogenannte "Smart Metering"-Einrichtungen, die es einem Verbraucher ermöglichen, elektrische Energie zu tageszeitabhängigen Konditionen zu beziehen. Für einen Kraffinierksbetreiber kann dies eine bessere Auslastung und eine Vermeidung von Spitzenlasten bewirken, wobei jedoch ein zusätzlicher Hardwareaufwand erforderlich ist.

Bekannt sind ferner Applikationen die es ermöglichen, verbrauchte elektrische Energie, erzeugte Photovoltaikenergie sowie in ein öffentliches Netz eingespeiste elektrische Energie zu überwachen und zu steuern. Zu diesem Zweck sind eine Auslese- und eine Empfangseinheit vorgesehen, die über einen verschlüsselten Funkstandard miteinander kommunizieren. Mit einer App können eine Netzeinspeisung, Erzeugungs- und Verbrauchswerte in Kilowattstunden über einen definierten Zeitraum sowie eine Leistung einer Photovoltaikanlage überwacht werden. Dabei werden entsprechende Daten auf einer Benutzeroberfläche eines mobilen Endgerätes als Grafik dargestellt. Auf diese Weise ist eine Steuerung von elektrischen Geräten in Abhängigkeit von der aktuellen Photovoltaikleistung möglich.

Bekannt sind ferner sogenannte Mikro-Kraft-Wärme-Kopplungen, die eine Klasse von Kraft-Wärme-Kopplungen des unteren bzw. untersten Leistungssegments von ca. 1 kW repräsentieren. Diese können z.B. als Festoxidbrennstoffzellen (engl. solid oxide fuel cell, SOFC) ausgebildet sein, wobei die genannten Brennstoffzellen mit Erdgas und mit Luft betrieben werden und erzeugte thermische und elektrische Energie in jeweils dafür vorgesehene Versorgungsnetze einspeisen. Dabei speist eine Brennstoffzelle im stationären Betrieb elektrische Energie zur Grundabdeckung in ein Hausnetz ein, gegebenenfalls auch in ein Netz eines Stromanbieters. Dabei ist eine Wandlung von Erdgas in elektrische Energie bei gleichzeitiger Nutzung der Abwärme möglich, wobei die Brennstoffzelle Lastspitzen in der Regel nicht abdecken kann.

### Offenbarung der Erfindung

Es ist eine Aufgabe der vorliegenden Erfindung, ein verbessertes Verfahren zum Betreiben einer dezentralen Energieversorgungseinrichtung bereitzustellen.

Die Aufgabe wird gemäß einem ersten Aspekt gelöst mit einem Verfahren zum Betreiben einer dezentralen Energieversorgungseinrichtung, wobei mittels der dezentralen Energieversorgungseinrichtung elektrische und thermische Energie bereitstellbar ist, aufweisend die Schritte:
- Ermitteln eines Status von wenigstens einer an die dezentrale Energieversorgungseinrichtung angeschlossenen Verbrauchseinrichtung;
- Ermitteln eines Auslastungsgrades der dezentralen Energieversorgungseinrichtung; und
- Bereitstellen von thermischer und/oder elektrischer Energie der dezentralen Energieversorgungseinrichtung für die wenigstens eine Verbrauchseinrichtung derart, dass die dezentrale Energieversorgungseinrichtung mit maximiertem Auslastungsgrad betrieben wird.

Auf diese Weise wird vorteilhaft eine Auslastung einer dezentralen Energieversorgungseinrichtung optimiert. Ein Anwender braucht sich vorteilhaft nicht darum zu kümmern, wie er eine optimale Auslastung einer dezentralen Energieversorgungseinrichtung erreichen kann. Dadurch ist im Ergebnis vorteilhaft unterstützt, dass der Anwender von öffentlichen Energieversorgungsnetzen unabhängiger ist und dabei auch kostengünstige Energie beziehen kann.

Gemäß einem zweiten Aspekt wird die Aufgabe gelöst mit einer dezentralen Energieversorgungseinrichtung mittels der elektrische und thermische Energie bereitstellbar ist, wobei die dezentrale Energieversorgungseinrichtung ausgebildet ist, einen Status von wenigstens einer an die dezentrale Energieversorgungseinrichtung angeschlossenen Verbrauchseinrichtung zu ermitteln, wobei die dezentrale Energieversorgungseinrichtung ausgebildet ist, einen Auslastungsgrad der dezentralen Energieversorgungseinrichtung zu ermitteln, und wobei die dezentrale Energieversorgungseinrichtung ausgebildet ist, thermische und/oder elektrische Energie der dezentralen Energieversorgungseinrichtung für die wenigstens eine Verbrauchseinrichtung derart bereitzustellen, dass die dezentrale Energieversorgungseinrichtung mit maximiertem Auslastungsgrad betreibbar ist.

Bevorzugte Ausführungsformen des erfindungsgemäßen Verfahrens und der erfindungsgemäßen dezentralen Energieversorgungseinrichtung sind Gegenstand von abhängigen Ansprüchen.

Eine vorteilhafte Weiterbildung des Verfahrens sieht vor, dass eine Energieerzeugung der dezentralen Energieversorgungseinrichtung an einen Energiebedarf der wenigstens einen Verbrauchseinrichtung angepasst wird. Dadurch ist vorteilhaft unterstützt, dass eine Energiebilanz im System von Erzeuger und Verbrauchern optimiert ist. Eine größtmögliche Unabhängigkeit von öffentlichen Versorgungsnetzen ist auf diese Weise vorteilhaft unterstützt.

Eine weitere vorteilhafte Weiterbildung des Verfahrens sieht vor, dass die wenigstens eine Verbrauchseinrichtung entsprechend einer maximierten Energieabgabekapazität der zentralen Energieversorgungseinrichtung geschaltet wird. Auf diese Weise kann mittels einer Führungsgröße in Form des maximierten Auslastungsgrades und einer Regelgröße in Form eines definierten Ein- und Ausschaltens der Verbrauchseinrichtung ein automatischer Regelkreis zur Optimierung der Energiebilanz der dezentralen Energieversorgungseinrichtung realisiert werden.

Eine weitere vorteilhafte Weiterbildung der dezentralen Energieversorgungseinrichtung zeichnet sich dadurch aus, dass sie eine Kommunikationsverbindung zwischen der wenigstens einen Verbrauchseinrichtung und der dezentralen Energieversorgungseinrichtung aufweist. Dadurch wird ein Rückkopplungskanal zwischen Erzeuger und Verbraucher bereitgestellt. Eine effiziente Steuerung der an die dezentrale Energieversorgungseinrichtung angeschlossenen Verbrauchseinrichtungen ist auf diese Weise vorteilhaft unterstützt.

Eine weitere vorteilhafte Weiterbildung des Verfahrens zeichnet sich dadurch aus, dass die Kommunikationsverbindung funkbasiert und/oder drahtgebunden und/oder fluidbasiert ausgebildet ist. Dadurch werden vorteilhaft unterschiedliche technische Möglichkeiten zu einer Kommunikation zwischen der Verbrauchseinrichtung und der dezentralen Energieversorgungseinrichtung bereitgestellt.

Eine weitere vorteilhafte Weiterbildung des Verfahrens sieht vor, dass in Abhängigkeit von einem Auslastungsgrad der dezentralen Energieversorgungseinrichtung Verbrauchseinrichtungen zugeschaltet werden. Dadurch kann ein Auslastungsgrad der dezentralen Energieversorgungseinrichtung dauerhaft möglichst hoch gehalten werden.

Eine weitere vorteilhafte Weiterbildung der dezentralen Energieversorgungseinrichtung zeichnet sich dadurch aus, dass die dezentrale Energieversorgungseinrichtung ein Blockheizkraftwerk oder eine Festoxidbrennstoffzelle oder eine Photovoltaikeinrichtung ist. Dadurch werden vorteilhaft unterschiedliche technische Möglichkeiten zur Realisierung der dezentralen Energieversorgungseinrichtung bereitgestellt.

Die Erfindung wird im Folgenden mit weiteren Merkmalen und Vorteilen anhand von zwei Figuren detailliert beschrieben. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Figuren. Die Figuren sind vor allem dazu gedacht, die erfindungswesentlichen Prinzipien zu verdeutlichen. Gleiche bzw. funktionsgleiche Elemente haben gleiche Bezugsziffern.

Offenbarte Verfahrensmerkmale ergeben sich analog aus entsprechenden offenbarten Vorrichtungsmerkmalen und umgekehrt. Dies bedeutet insbesondere, dass sich Merkmale, technische Vorteile und Ausführungen betreffend das Verfahren zum Betreiben einer dezentralen Energieversorgungseinrichtung in analoger Weise aus entsprechenden Ausführungen, Merkmalen und Vorteilen betreffend die dezentrale Energieversorgungseinrichtung ergeben und umgekehrt.
In den Figuren zeigt:
- Fig. 1: ein prinzipielles Blockschaltbild eines Systems mit einer dezentralen Energieversorgungseinrichtung und daran angeschlossenen Energieverbrauchseinrichtungen; und
- Fig. 2: einen prinzipiellen Ablauf einer Ausführungsform des erfindungsgemäßen Verfahrens.

### Beschreibung von Ausführungsbeispielen

Ein Kerngedanke der Erfindung besteht darin, dass ein System aus Energieverbrauchern und einer dezentralen Energieversorgungseinrichtung aufeinander abgestimmt wird, so dass die dezentrale Energieversorgungseinrichtung mit optimiertem Auslastungsgrad betrieben werden kann.

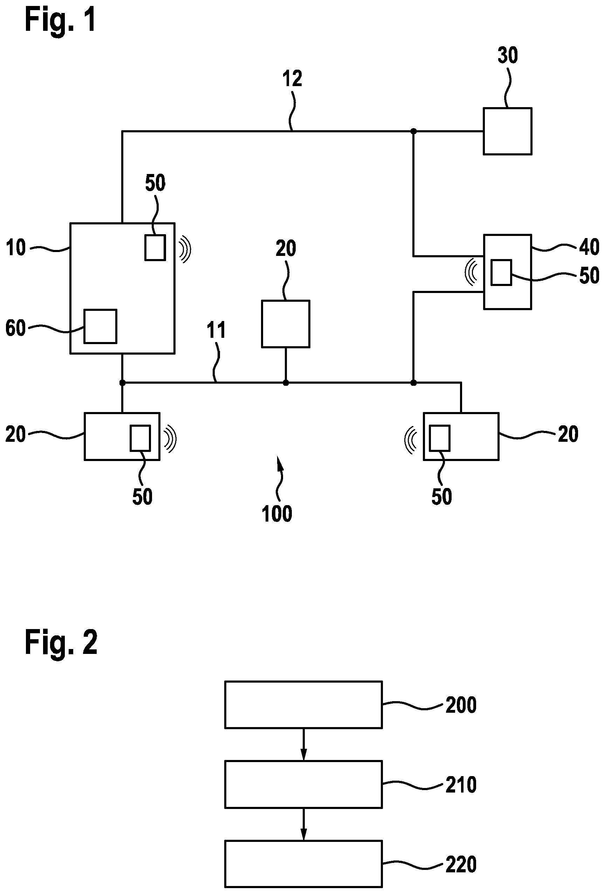

Fig. 1 zeigt stark vereinfacht ein System 100 mit einer Ausführungsform einer vorgeschlagenen dezentralen Energieversorgungseinrichtung 10. Die dezentrale Energieversorgungseinrichtung 10 kann beispielsweise als ein Blockheizkraftwerk, eine Festoxidbrennstoffzelle, eine Photovoltaikeinrichtung, usw. ausgebildet sein. An eine elektrische Energieversorgungsleitung 11 sind einerseits die dezentrale Energieversorgungseinrichtung 10 und andererseits elektrische Verbrauchseinrichtungen 20 angeschlossen, beispielsweise in Form eines Backofens, einer Glühbirne, eines Fernsehgerätes usw.

Ferner ist an eine thermische Energieversorgungsleitung 12 der dezentralen Energieversorgungseinrichtung 10 eine thermische Verbrauchseinrichtung 30 angeschlossen, beispielsweise in Form einer Dusche.

Man erkennt im System 100 ferner eine Verbrauchseinrichtung 40, die sowohl an die elektrische Energieversorgungsleitung 11 und an die thermische Energieversorgungsleitung 12 der dezentralen Energieversorgungseinrichtung 10 angeschlossen ist, und somit elektrische und thermische Energie von der dezentralen Energieversorgungseinrichtung 10 bezieht. Die Verbrauchseinrichtung 40 kann beispielsweise als eine elektrische Waschmaschine ausgebildet sein.

Man erkennt in den Verbrauchseinrichtungen 20, 40 und in der dezentralen Energieversorgungseinrichtung 10 jeweils eine Schnittstelleneinrichtung 50, beispielsweise in Form einer an sich bekannten Funkschnittstelle, die eine Energieaufnahme bzw. einen Status der Verbrauchseinrichtungen 20, 40 an die dezentrale Energieversorgungseinrichtung 10 übermittelt. Alternativ kann die Schnittstelleneinrichtung 50 auch drahtgebunden ausgebildet sein. Ferner ist die dezentrale Energieversorgungseinrichtung 10 in der Lage, ihren Auslastungsgrad zu ermitteln. Eine Kommunikationsverbindung zwischen der thermischen Verbrauchseinrichtung 30 und der dezentralen Energieversorgungseinrichtung 10 wird mittels der thermischen Energieversorgungsleitung 12 realisiert, mittels der ein Status der thermischen Verbrauchseinrichtung 30 in Form einer Menge an verbrauchtem Warmwasser ermittelt wird. Eine Wirkungsweise der Schnittstelleneinrichtung 50 ist im letzteren Fall somit fluidbasiert.

Vorteilhaft lässt sich das erfindungsgemäße Verfahren dadurch mit unterschiedlichen Kommunikationsverbindungen zwischen der dezentralen Energieversorgungseinrichtung 10 und den Verbrauchseinrichtungen 20, 30, 40 durchführen.

Als Reaktion auf die erfassten Stati der Verbrauchseinrichtungen 20, 30, 40 und den ermittelten Auslastungsgrad der dezentralen Energieversorgungseinrichtung 10 wird mittels einer Steuerungseinrichtung 60 die dezentrale Energieversorgungseinrichtung 10 derart betrieben und die Verbrauchseinrichtungen 20, 30, 40 derart gesteuert, dass ein optimierter Betriebsmodus bzw. Auslastungsgrad der dezentralen Energieversorgungseinrichtung 10 realisiert wird.

Ein beispielhaftes Anwendungsszenario besteht darin, dass während eines Zeitraums, in welchem die thermische Verbrauchseinrichtung 30 benutzt wird (z.B. ein Duschvorgang unter Verwendung von Warmwasser stattfindet), die von der dezentralen Energieversorgungseinrichtung 10 erzeugte thermische Energie genutzt wird. Zu einer Abnahme der von der dezentralen Energieversorgungseinrichtung 10 erzeugten elektrischen Energie wird im selben Zeitraum durch die Steuerungseinrichtung 60 die elektrische und thermische Energie verbrauchende Verbrauchseinrichtung 40 (z.B. eine Waschmaschine) angeschaltet.

Ein weiteres Anwendungsszenario sieht vor, dass elektrische Verbrauchseinrichtungen 20 in Form eines Fernsehers und einer elektrischen Hausbeleuchtung eingeschaltet sind, wodurch von der dezentralen Energieversorgungseinrichtung 10 erzeugte elektrische Energie abgenommen wird. Aufgrund der elektrischen Energieerzeugung wird von der dezentralen Energieversorgungseinrichtung 10 auch thermische Energie erzeugt. Die Steuerungseinrichtung 60 signalisiert nunmehr einer an die dezentrale Energieversorgungseinrichtung 10 angeschlossenen Waschmaschine und einer an die dezentrale Energieversorgungseinrichtung 10 angeschlossenen Spülmaschine über die Schnittstelleneinrichtung 50, warmes Wasser der dezentralen Energieversorgungseinrichtung 10 abzunehmen und startet einen Spülvorgang der beiden genannten Geräte.

Als ein weiteres Anwendungsszenario ist beispielsweise auch denkbar, dass die dezentrale Energieversorgungseinrichtung 10 sich in einem Leerlaufmodus (engl. idle mode) befindet. Zum Zwecke eines verbesserten Auslastungsgrads der dezentralen Energieversorgungseinrichtung 10 schaltet die dezentrale Energieversorgungseinrichtung 10 deshalb automatisch einen elektrischen Trockner an.

Im Ergebnis ist es dadurch vorteilhaft möglich, in Abhängigkeit von einem Auslastungsgrad der dezentralen Energieversorgungseinrichtung 10 Verbrauchseinrichtungen 20, 30, 40 zuzuschalten, wobei bei einem geringen Auslastungsgrad eine größere Anzahl an Verbrauchseinrichtungen 20, 30, 40 und bei einem hohen Auslastungsgrad eine geringe Anzahl an Verbrauchseinrichtungen 20, 30, 40 zugeschaltet werden. Dadurch kann ein Auslastungsgrad der dezentralen Energieversorgungseinrichtung 10 vorteilhaft gleichmäßig hoch gehalten werden.

Vorteilhaft ist es möglich, die Verbrauchseinrichtungen 20, 40 mit der Kommunikationsschnittstelle 50 nachzurüsten und sie auf diese Weise in die Lage zu versetzen, von der dezentralen Energieversorgungseinrichtung 10 zum Zwecke eines überwiegenden Beziehens der von der dezentralen Energieversorgungseinrichtung 10 erzeugten elektrischen und/oder thermischen Energie angesteuert zu werden.

Eine Möglichkeit zur Nutzung bestehender Infrastruktur mit deren Schnittstellen ist dadurch vorteilhaft gegeben.

Im Ergebnis ist dadurch eine erhöhte Wirtschaftlichkeit der dezentralen Energieversorgungseinrichtung 10 durch einen erhöhten Eigenverbrauch und eine bessere Grundlastverteilung unterstützt.

Es versteht sich von selbst, dass die beschriebenen Szenarien lediglich exemplarische Szenarien sind und viele weitere Szenarien mittels der vorgeschlagenen dezentralen Energieversorgungseinrichtung 10 umsetzbar sind.

Fig. 2 zeigt einen prinzipiellen Ablauf einer Ausführungsform des vorgeschlagenen Verfahrens:
In einem Schritt 200 wird ein Status von wenigstens einer an die dezentrale Energieversorgungseinrichtung 10 angeschlossenen Verbrauchseinrichtung 20, 30, 40 ermittelt.

In einem Schritt 210 wird ein Auslastungsgrad der dezentralen Energieversorgungseinrichtung 10 ermittelt.

In einem Schritt 220 wird thermische und/oder elektrische Energie der dezentralen Energieversorgungseinrichtung 10 für die wenigstens eine Verbrauchseinrichtung 20, 30, 40 derart bereitgestellt, dass die dezentrale Energieversorgungseinrichtung 10 mit maximiertem Auslastungsgrad betrieben wird.

Vorteilhaft lässt sich das vorgeschlagene Verfahren als eine Software realisieren, die auf der elektronischen Steuerungseinrichtung 60 abläuft und auf diese Weise auf einfache Weise modifiziert werden kann.

Zusammenfassend wird mit der vorliegenden Erfindung ein Verfahren zum Betreiben einer dezentralen Energieversorgungseinrichtung vorgeschlagen, mit der ein in energetischer Hinsicht möglichst autarker Betrieb von angeschlossenen Verbrauchseinrichtungen unterstützt ist. Dies wird dadurch erreicht, dass unter einer Vorgabe eines maximierten bzw. maximalen Auslastungsgrades der dezentralen Energieversorgungseinrichtung angeschlossene Verbrauchseinrichtungen geschaltet werden.

Der Fachmann wird die Merkmale der Erfindung in geeigneter Weise abändern und/oder miteinander kombinieren, ohne vom Kern der Erfindung abzuweichen.

## Patentansprüche

1. Verfahren zum Betreiben einer dezentralen Energieversorgungseinrichtung (10), wobei mittels der dezentralen Energieversorgungseinrichtung (10) elektrische und thermische Energie bereitstellbar ist, aufweisend die Schritte:
- Ermitteln eines Status von wenigstens einer an die dezentrale Energieversorgungseinrichtung (10) angeschlossenen Verbrauchseinrichtung (20, 30, 40);
- Ermitteln eines Auslastungsgrades der dezentralen Energieversorgungseinrichtung (10); und
- Bereitstellen von thermischer und/oder elektrischer Energie der dezentralen Energieversorgungseinrichtung (10) für die wenigstens eine Verbrauchseinrichtung (20, 30, 40) derart, dass die dezentrale Energieversorgungseinrichtung (10) mit maximiertem Auslastungsgrad betrieben wird.

2. Verfahren nach Anspruch 1, wobei eine Energieerzeugung der dezentralen Energieversorgungseinrichtung (10) an einen Energiebedarf der wenigstens einen Verbrauchseinrichtung (20, 30, 40) angepasst wird.

3. Verfahren nach Anspruch 1 oder 2, wobei die wenigstens eine Verbrauchseinrichtung (20, 30, 40) entsprechend einer maximierten Energieabgabekapazität der dezentralen Energieversorgungseinrichtung (10) geschaltet wird.

4. Verfahren nach Anspruch 3, wobei in Abhängigkeit von einem Auslastungsgrad der dezentralen Energieversorgungseinrichtung (10) Verbrauchseinrichtungen (20, 30, 40) zugeschaltet werden.

5. Dezentrale Energieversorgungseinrichtung (10) mittels der elektrische und thermische Energie bereitstellbar ist, wobei die dezentrale Energieversorgungseinrichtung (10) ausgebildet ist, einen Status von wenigstens einer an die dezentrale Energieversorgungseinrichtung (10) angeschlossenen Verbrauchseinrichtung (20, 30, 40) zu ermitteln, wobei die dezentrale Energieversorgungseinrichtung (10) ausgebildet ist, einen Auslastungsgrad der dezentralen Energieversorgungseinrichtung (10) zu ermitteln, und wobei die dezentrale Energieversorgungseinrichtung (10) ausgebildet ist, thermische und/oder elektrische Energie der dezentralen Energieversorgungseinrichtung (10) für die wenigstens eine Verbrauchseinrichtung (20, 30, 40) derart bereitzustellen, dass die dezentrale Energieversorgungseinrichtung (10) mit maximiertem Auslastungsgrad betreibbar ist.

6. Dezentrale Energieversorgungseinrichtung (10) nach Anspruch 5, aufweisend eine Kommunikationsverbindung zwischen der wenigstens einen Verbrauchseinrichtung (20) und der dezentralen Energieversorgungseinrichtung (10).

7. Dezentrale Energieversorgungseinrichtung (10) nach Anspruch 6, **dadurch gekennzeichnet, dass** die Kommunikationsverbindung funkbasiert und/oder drahtgebunden und/oder fluidbasiert ausgebildet ist.

8. Dezentrale Energieversorgungseinrichtung (10) nach einem der Ansprüche 5 bis 7, **dadurch gekennzeichnet, dass** die dezentrale Energieversorgungseinrichtung (10) ein Blockheizkraftwerk oder eine Festoxidbrennstoffzelle oder eine Photovoltaikeinrichtung ist.

9. Computerprogrammprodukt mit Programmcodemitteln zur Durchführung des Verfahrens nach einem der Ansprüche 1 bis 4, wenn es auf einer Steuerungsvorrichtung (60) abläuft oder auf einem computerlesbaren Datenträger gespeichert ist.
